# EUROPEAN PATENT APPLICATION

(11) **EP 3 096 010 A1**
(43) Date of publication of application: **23.11.2016**
(21) Application number: 15305768.2
(22) Date of filing: 21.05.2015
(51) Int. Cl.: F04B 1/04, F04B 9/04, F04B 53/14, F03C 1/30, F03C 1/04, F16J 1/22

(54) **ACTUATION SYSTEM AND HYDRAULIC PUMP COMPRISING SUCH AN ACTUATION SYSTEM**

(71) Applicant: Aktiebolaget SKF, 415 50 Göteborg (SE)
(72) Inventor: Viault, Samuel, 37360 Saint-Antoine-du-Rocher (FR); Corbett, Richard, 37230 Fondettes (FR); Hauvespre, Benoit, 37230 Saint Etienne de Chigny (FR)
(74) Representative: Tweedlie, Diane Harkness

(57) **Abstract**

This actuation system (S) comprises a cam follower (2) movable in translation in and with respect to a housing (H), the cam follower (2) being adapted to be in contact with a cam (6) of a shaft, such as a camshaft, and a piston (4) movable in translation in and with respect to the housing (H), the piston (4) comprising a rod (40) having an end surface (40a) making a contact with an axial surface (202) of the cam follower (2). At least the end surface (40a) of the rod (40) is spherical.

The invention also concerns a hydraulic pump comprising at least one such actuation system (S).

## Description

### TECHNICAL FIELD OF THE INVENTION

The invention relates to an actuation system comprising a cam follower and a piston. The invention also relates to a hydraulic pump comprising such an actuation system.

### TECHNICAL BACKGROUND OF THE INVENTION

Actuation systems, for example for hydraulic pumps, generally comprise a cam follower which is contact with a cam whose rotation induces translational movements of the cam follower in a housing. The translation movements of the cam follower are generally transmitted to a translating part, for example a piston of a hydraulic pump or another type of rotating machine thanks to a contact between a rod of the piston and a surface of the cam follower. The rotation of the cam is transformed into a translation movement by a roller mounted on a pin belonging to the cam follower.

In case the axis of the cam and the roller are not exactly parallel, unbalanced loads on the ends of the pin can provoke friction and wear of the ears of the cam follower in which the pin is mounted. In addition, such a misalignment may be transmitted to the cam follower and provoke a misalignment with the rod of the piston and induce wear on the internal surfaces of the housing.

### SUMMARY OF THE INVENTION

The aim of the invention is to provide a new actuation system whose lifetime is extended.

To this end, the invention concerns an actuation system comprising a cam follower movable in translation in and with respect to a housing, the cam follower being adapted to be in contact with a cam of a shaft, such as a camshaft, and a piston movable in translation in and with respect the housing, the piston comprising a rod having an end surface making a contact with an axial surface of the cam follower, wherein at least the end surface of the rod is spherical.

Thanks to the invention, a self-alignment occurs between the cam follower and the rod of the piston, hereby compensating misalignments. This reduces contact pressure between the roller and the cam. Consequently, the lifetime of the actuation system is extended.

According to further aspects of the invention which are advantageous but not compulsory, such an actuation system may include one or several of the following features:
- Both the end surface of the rod and the axial surface of the cam follower are spherical.
- The end surface of the rod and the axial surface of the cam follower have a curvature center located on the side of the piston.
- The curvature radius of the end surface of the rod and the curvature radius of the axial surface of the cam follower are equal.
- The curvature radiuses of the end surface of the rod and the axial surface of the cam follower are comprised between 100 and 200 mm.
- The curvature radius of the end surface of the rod and the curvature radius of the axial surface of the cam follower are different.
- The end surface of the rod and the axial surface of the cam follower have a curvature center located on the side of the cam follower.
- The end surface of the rod has a curvature center located on the side of the piston and the axial surface of the cam follower has a curvature center located on the side of the cam follower.
- The axial surface of the cam follower is flat.
- The curvature radius of the end surface of the rod is comprised between 100 and 200 mm.
- The cam follower includes a roller which is adapted to be in contact with the cam.

The invention also concerns a hydraulic pump comprising at least one actuation system as mentioned here-above.

### BRIEF DESCRIPTION OF THE DRAWINGS

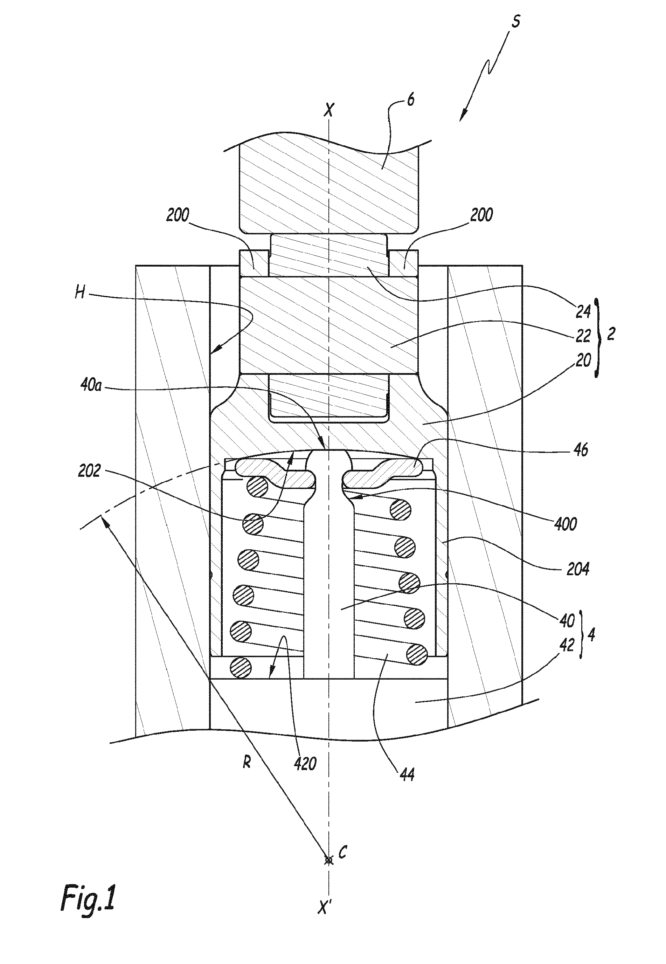

The invention will now be explained in reference to the annexed figure 1, as an illustrative example. The annexed figure 1 is a sectional view of an actuation system according to the invention.

### DETAILED DESCRIPTION OF SOME EMBODIMENTS

Figure 1 shows an actuation system S comprising a cam follower 2 and a piston 4. The cam follower 2 includes a tappet 20, a pin 22 and a roller 24. The tappet 20 comprises ears 200 in which are mounted ends of the pin 22. The roller 24 is mounted on the pin 22 between the ears 200 so that the roller 24 can rotate with respect to the pin 22. The roller 24 is in contact with a cam 6, which belongs to a non-shown rotating shaft, such as a camshaft, whose rotation induces the translation of the cam follower 2 in and with respect to a housing H. The cam follower 2 is therefore adapted to be in contact with the cam 6, via the roller 24. The cam follower 2 is movable in translation with respect to the housing H along a translation axis X-X'.

The piston 4, and more globally the actuation system S, may belong to a rotary machine such as a non-shown hydraulic pump, which may comprise several actuation systems S. The piston 4 is movable in translation in and with respect to the housing H. According to a non-shown embodiment of the invention, the piston 4 may be movable in translation in a second housing distinct from the housing H but coaxial with the housing H.

The cam follower 2 transmits the translational movement generated by the contact between the cam 6 and the roller 24 to the piston 4. The piston 4 therefore comprises a rod or plunger 40 extending around axis X-X' and having an end surface 40a making a contact with an axial surface 202 of the cam follower 2, which is provided on the bottom of a tubular portion 204 of the tappet 20 extending on the opposite side of the cam follower 2 with respect to the roller 24. The axial surface 202 is approximately perpendicular to the axis X-X'.

The rod 40 is movable in translation with respect to a body 42 of the piston 4. The end surface 40a of the rod 40 is permanently urged against the axial surface 202 by a resilient element, such as a spring 44 mounted around the rod 40 and inside the tubular portion 204 between an axial surface 420 of the body 42 and a retaining plate 46 mounted around the rod 40 in a groove 400 provided on the outer surface of the rod 40 near the end surface 40a.

According to the invention, the end surface 40a of the rod 40 is spherical. The cinematic link between the piston 4 and the cam follower 2 is therefore a spherical joint. This provokes a self-alignment between the piston 4 and the cam follower 2. This reduces friction and wear that may occur in case of misalignments between the cam follower 2 and the piston 4, and between the roller 24 and the cam 6. Friction between the ears 200 and the pin 22 is reduced.

In the represented embodiment, both the end surface 40a and the axial surface 202 are spherical. The end surface 40a and the axial surface 202 have preferably a curvature center C located on the side of the piston 4, and preferably within the piston 4 and on the axis X-X'. In other words, the axial surface 202 is therefore concave from the point of view of the rod 40.

According to a non-show embodiment of the invention, the curvature center of the axial surface 202 and the end surface 40a may be located on the side of the cam follower 2, preferably on the axis X-X' and within the cam follower 2. In such a case, the end surface 40a may be concave from the point of view of the axial surface 202.

According to another non-shown embodiment of the invention, the curvature center of the end surface 40a may be located on the side of the piston 4, preferably within the piston 4 on the axis X-X', while the curvature center of the axial surface 202 may be located on the side of the cam follower 2, preferably within the cam follower 2 and on the axis X-X'. In such a case, the axial surface 202 and the end surface 40a may be in contact only by a point of contact, and the end surface 40a and the axial surface 202 may both be convex from the point of view of each other.

In the represented embodiment, the end surface 40a and the axial surface 202 have curvature radiuses equal to a curvature radius R originating from the curvature center C. The curvature radius R may be comprised between 100 and 200 mm, for example equal to 130 mm.

According to a non-shown embodiment of the invention, the curvature radius of the end surface 40a and the curvature radius of the axial surface 202 may be different.

According to another non-shown embodiment of the invention, the axial surface 202 may be flat. In such a case, only the surface 40a is spherical. In such a case, the curvature center of the end surface 40a is located on the side of the piston 4, and the curvature radius R of the end surface 40a is preferably comprised between 100 and 200 mm. This embodiment also corresponds to the case in which the curvature radius of the axial surface 202 is infinite.

According to another non-shown embodiment of the invention, the cam follower 2 may not comprise any roller 24 in contact with the cam 6. In such a case, the cam follower 2 may be adapted to be contact with the cam 6 only by a flat surface provided on an axial end of the cam follower 2 opposed to the piston 4, said flat surface being urged in direct contact against the cam 6.

The technical features of the embodiments and variants described here-above can be combined to create new embodiments of the invention.

## Claims

1. Actuation system (S) comprising a cam follower (2) movable in translation in and with respect to a housing (H), the cam follower (2) being adapted to be in contact with a cam (6) of a shaft, such as a camshaft, and a piston (4) movable in translation in and with respect to the housing (H), the piston (4) comprising a rod (40) having an end surface (40a) making a contact with an axial surface (202) of the cam follower (2), wherein at least the end surface (40a) of the rod (40) is spherical.

2. Actuation system according to claim 1, wherein both the end surface (40a) of the rod (40) and the axial surface (202) of the cam follower (2) are spherical.

3. Actuation system according to claim 2, wherein the end surface (40a) of the rod (40) and the axial surface (202) of the cam follower (2) have a curvature center (C) located on the side of the piston (4).

4. Actuation system according to claim 3, wherein the curvature radius (R) of the end surface (40a) of the rod (40) and the curvature radius (R) of the axial surface (202) of the cam follower (2) are equal.

5. Actuation system according to claim 4, wherein the curvature radiuses (R) of the end surface (40a) of the rod (40) and the axial surface (202) of the cam follower (2) are comprised between 100 and 200 mm.

6. Actuation system according to claim 3, wherein the curvature radius of the end surface (40a) of the rod (40) and the curvature radius of the axial surface (202) of the cam follower (2) are different.

7. Actuation system according to claim 2, wherein the end surface (40a) of the rod (40) and the axial surface (202) of the cam follower (2) have a curvature center located on the side of the cam follower (2).

8. Actuation system according to claim 2, wherein the end surface (40a) of the rod (40) has a curvature center located on the side of the piston (4) and the axial surface (202) of the cam follower (2) has a curvature center located on the side of the cam follower (2).

9. Actuation system according to claim 1, wherein the axial surface (202) of the cam follower (2) is flat.

10. Actuation system according to claim 9, wherein the curvature radius (R) of the end surface (40a) of the rod (40) is comprised between 100 and 200 mm.

11. Actuation system according to any preceding claim, wherein the cam follower (2) includes a roller (24) which is adapted to be in contact with the cam (6).

12. Hydraulic pump comprising at least one actuation system (S) according to any preceding claim.
